# EUROPÄISCHE PATENTSCHRIFT

(11) **EP 3 368 394 B1**
(45) Veröffentlichungstag und Bekanntmachung des Hinweises auf die Patenterteilung: **18.08.2021**
(21) Anmeldenummer: 16770480.8
(22) Anmeldetag: 21.09.2016
(51) Int. Cl.: B62D 6/06

(54) **VERFAHREN UND VORRICHTUNG ZUR FAHRERUNABHÄNGIGEN BEEINFLUSSUNG EINES LENKUNGSELEMENTES EINES EINSPURIGEN KRAFTFAHRZEUGS**
METHOD AND DEVICE FOR THE DRIVER-INDEPENDENT INFLUENCING OF A STEERING SYSTEM IN A SINGLE-TRACK MOTOR VEHICLE
PROCÉDÉ ET DISPOSITIF POUR AGIR INDÉPENDAMMENT DU CONDUCTEUR SUR UN ÉLÉMENT DE DIRECTION D'UN VÉHICULE À MOTEUR À DEUX ROUES PLACÉES L'UNE DERRIÈRE L'AUTRE

(30) Priorität: 27.10.2015 DE 102015220901
(43) Veröffentlichungstag der Anmeldung: 05.09.2018
(73) Patentinhaber: Robert Bosch GmbH, 70442 Stuttgart (DE)
(72) Erfinder: KUTTENBERGER, Alfred, 71263 Weil der Stadt (DE)
(86) Internationale Anmeldenummer: PCT/EP2016/072355
(87) Internationale Veröffentlichungsnummer: WO 2017/071882

(56) Entgegenhaltungen:
- EP-A1- 2 322 410
- DE-A1-102005 041 281
- DE-A1-102012 217 137
- DE-A1-102012 221 615
- GB-A- 2 494 496
- US-A1- 2014 288 785

## Beschreibung

### Stand der Technik

Aus der DE 10 2013 200 044 A1 ist ein Verfahren zur Durchführung eines Notbremsvorgangs in einem Zweirad bekannt, bei dem im Falle, dass eine Gefährdungssituation festgestellt wird und außerdem mindestens eine Fahrzeugzustandsgröße, eine Fahrerkenngröße und/oder eine Umgebungskenngröße in einem definierten Wertebereich liegt, selbsttätig ein Bremsvorgang im Zweirad durchgeführt wird.

In der GB 2 494 496 A wird es ein Lenkunterstützungssystem für ein Zweirad sowie eine Steuerung für ein Lenkunterstützungssystem beschrieben. Das Lenkunterstützungssystem weist einen Aktuator auf, mit Hilfe dessen ein Lenkmoment auf das Zweirad ausgeübt werden kann. Der Aktuator kann beispielsweise ein mit einem Lenkrohr zusammenwirkender Elektromotor sein. Die Steuerung kann den Aktuator gezielt ansteuern, um ein gewünschtes Lenkmoment zu bewirken.

### Offenbarung der Erfindung

Die Erfindung betrifft ein Verfahren zur fahrerunabhängigen Beeinflussung eines Lenkungselementes eines einspurigen Kraftfahrzeugs bei einem fahrerunabhängig durchgeführten Notbremsvorgang, bei dem
- das Vorliegen eines fahrerunabhängig durch geführten Notbremsvorgangsermittelt wird (102) und
- abhängig davon eine fahrerunabhängige Beeinflussung des Lenkungselementes erfolgt (104), wobei
- es sich bei dem Lenkungselement um einen Lenkungsdämpfer handelt, welcher bei dem Notbremsvorgang derart beeinflusst wird, dass er eine stärkere Dämpfung von Lenkerschwingungen aufweist oder
- es sich bei dem Lenkungselement um einen Lenkaktuator zur fahrerunabhängigen Einstellung eines Lenkwinkels handelt, welcher bei einem Notbremsvorgang fahrerunabhängig derart angesteuert wird, dass das einspurige Kraftfahrzeug geradlinig weiterfährt (104).

Die Dämpfung von Lenkerschwingungen wird während des Notbremsvorgangs verstärkt. Es kann bei einem Notbremsvorgang aber auch eine adaptive Dämpfung von Lenkerschwingungen erfolgen.

Eine vorteilhafte Ausgestaltung der Erfindung ist dadurch gekennzeichnet, dass es sich bei dem einspurigen Kraftfahrzeug um ein Motorrad oder auch einen Motorroller handelt.

Eine vorteilhafte Ausgestaltung der Erfindung ist dadurch gekennzeichnet, dass der fahrerunabhängige Notbremsvorgang abhängig von den Signalen einer in Fahrtrichtung vorausschauenden Umgebungssensorik ausgelöst wird. Derartige Umfeldsensoriken sind insbesondere im Bereich der zweispurigen Kraftfahrzeuge bekannt.

Weiter umfasst die Erfindung eine Vorrichtung zur fahrerunabhängigen Beeinflussung eines Lenkungselementes eines einspurigen Kraftfahrzeugs bei einem fahrerunabhängig durchgeführten Notbremsvorgang, enthaltend einen Lenkungsdämpfer oder einen Lenkaktuator, die zur Durchführung eines Verfahrens nach Anspruch 1 ausgestaltet ist, wobei
- es sich bei dem Lenkungselement um einen Lenkungsdämpfer handelt, welcher bei dem Notbremsvorgang derart beeinflusst wird, dass er eine stärkere Dämpfung von Lenkerschwingungen aufweist oder
- es sich bei dem Lenkungselement um einen Lenkaktuator zur fahrerunabhängigen Einstellung eines Lenkwinkels handelt, welcher bei einem Notbremsvorgang fahrerunabhängig derart angesteuert wird, dass das einspurige Kraftfahrzeug geradlinig weiterfährt (104). Dabei handelt es sich insbesondere um ein Steuergerät, in welchem der Programmcode zur Durchführung der erfindungsgemäßen Verfahren hinterlegt ist.

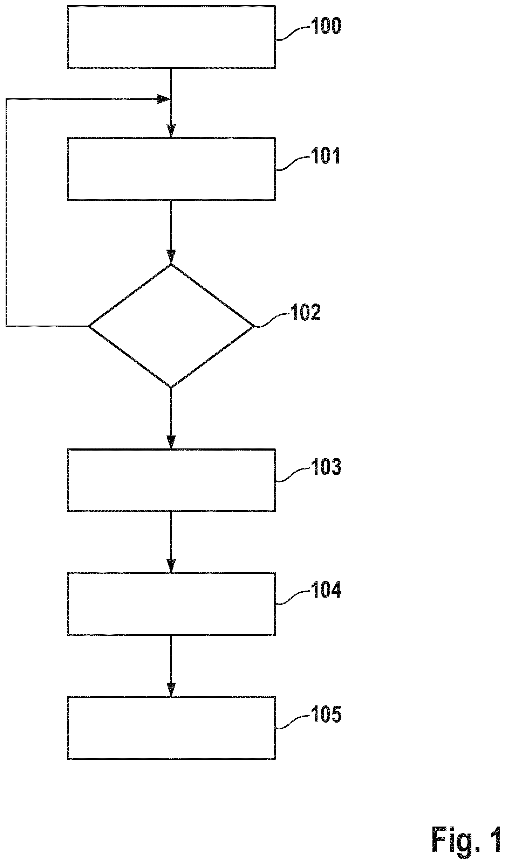

### Die Zeichnung umfasst Fig. 1

In Fig. 1 ist der grundlegende Ablauf einer Ausführungsform des erfindungsgemäßen Verfahrens dargestellt.

In der Erfindung wird der Einsatz eines aktiven Lenkungsdämpfers oder einer aktiven Lenkung zur Erhöhung der Motorradsicherheit dargestellt.

Wird durch eine vorausschauende Sensorik eine Notbremsung eingeleitet, dann ist dies für den Fahrer häufig überraschend. Somit hat er sich nicht auf die Notbremssituation vorbereitet. Dies hat zur Folge, dass das Motorrad durch die starke Bremsung ins Schlingern kommen kann.

Hier kann sich ein aktiver Lenkungsdämpfer als vorteilhaft erweisen. Dieser aktiv ansteuerbare Lenkungsdämpfer kann von der Umfeldsensorik bereits vor der Auslösung der Notbremsung derart umkonfiguriert werden, dass dadurch das Schlingern des Motorrads in dieser speziellen Notbremssituation verhindert oder zumindest deutlich reduziert wird. Beispielsweise kann die Dämpferkennlinie derart modifiziert werden, dass der Dämpfer härter wird. Es ist auch möglich, eine progressive Kennlinie des Lenkungsdämpfers einzustellen, wodurch große Lenkerausschläge erschwert oder verhindert werden. Dadurch bleibt das Motorrad in der Fahrspur und es kann ein Sturz verhindert werden. Auch kann durch die verstärkte Geradeausbewegung des Motorrads wieder mehr Bremsleistung übertragen werden, so dass das Motorrad früher zum Stillstand kommt.

Zur Stabilisierung eines Motorrads während einer Notbremsung eignet sich auch eine aktive Lenkung, welche z.B. über einen elektrischen Steller angesteuert werden kann. Es ist aber z.B. auch eine hydraulische Ansteuerung denkbar. Anders als ein Auto bezieht ein Motorrad seine Stabilität aus der Bewegung heraus. Durch die Drehung der Räder werden Kreiselkräfte aufgebaut, welche das Motorrad in der Balance halten. Diese Kreiselkräfte wachsen mit zunehmender Raddrehzahl an. Wird das Motorrad nun langsamer, so verringern sich die Kreiselkräfte und das Motorrad wird instabil. Das Halten des Motorrads in der Balance wird deshalb mit sinkender Geschwindigkeit zunehmend schwieriger. Da in einer Notbremssituation der Fahrer mit dem Geschehen häufig überfordert ist, wird er nur oft teilweise zur Aufrechterhaltung der Balance des Motorrads beitragen können. Mit Hilfe von aktiven Steuerungs- und/oder Regelungsimpulsen an der Lenkung wird diese im Notbremsfall derart angesteuert, dass das Motorrad bis zum Stillstand gerade gehalten wird. Dadurch wird sowohl ein Sturz des Motorrads verhindert als auch das Motorrad optimal abgebremst, da dieses im aufrechten Zustand die größte Bremsleistung bzw. Bremsverzögerung erbringen kann.

Das Bremsen in der Kurve stellt eine der schwierigsten Aufgabenstellungen beim Motorradfahren dar. Hier kann aufgrund des Kammschen Kreises nur ein Teil der Bremskraft auf das Rad übertragen werden, da ein Teil der von der Fahrbahn auf das Rad ausgeübten Kraft für die Kurvenführung des Rades erforderlich ist. Zusätzlich kommt bei einer Bremsung in der Kurve noch das Aufstellmoment hinzu, was dazu führt, dass das Motorrad den Drang zu einer Geradeausfahrt hat, wenn nicht gegengelenkt wird. Unter normalen Bedingungen beherrscht ein geübter Motorradfahrer diese Situation, da er sich darauf einstellen kann. In einer Notbremssituation ist jedoch nicht auszuschließen, dass der nicht auf die Notbremsung vorbereitete Fahrer nicht oder nur verspätet reagiert oder sogar zu falschen Reaktionen neigt. In diesem Fall greift nun die aktive Lenkung ein und stabilisiert das Motorrad mit kontrollierten Lenkbewegungen. Somit wird das Motorrad in der Kurve sicher geführt und bei Verringerung der Geschwindigkeit kontrolliert in die Senkrechte gebracht, um einen Sturz im Stillstand zu verhindern.

Der Ablauf einer Ausführungsform des erfindungsgemäßen Verfahrens ist in Fig. 1 dargestellt. Nach dem Start des Verfahrens in Block 100 werden in Block 101 die Ausgangssignale einer dem Motorrad in Fahrtrichtung vorausschauenden Umgebungssensorik ausgewertet. In Block 102 wird anschließend entschieden, ob anhand dieser Signale eine Unfallsituation des Motorrads unmittelbar bevorsteht. Ist dies nicht der Fall, dann wird zu Block 101 zurückgegangen. Steht jedoch ein Unfall bzw. eine Kollision unmittelbar bevor, dann wird in Block 103 ein Notbremsvorgang eingeleitet und in Block 104 erfolgt zugleich eine fahrerunabhängige Beeinflussung eines Lenkungselementes des Motorrads, um das Motorrad während der Notbremsung unter Kontrolle zu halten. In Block 105 endet das Verfahren.

## Patentansprüche

1. Verfahren zur fahrerunabhängigen Beeinflussung eines Lenkungselementes eines einspurigen Kraftfahrzeugs bei einem fahrerunabhängig durchgeführten Notbremsvorgang, bei dem
- das Vorliegen eines fahrerunabhängig durchgeführten Notbremsvorgangs ermittelt wird (102) und
- abhängig davon eine fahrerunabhängige Beeinflussung des Lenkungselementes erfolgt (104),
wobei
- es sich bei dem Lenkungselement um einen Lenkungsdämpfer handelt, welcher bei dem Notbremsvorgang derart beeinflusst wird, dass er eine stärkere Dämpfung von Lenkerschwingungen aufweist oder
- es sich bei dem Lenkungselement um einen Lenkaktuator zur fahrerunabhängigen Einstellung eines Lenkwinkels handelt, welcher bei einem Notbremsvorgang fahrerunabhängig derart angesteuert wird, dass das einspurige Kraftfahrzeug geradlinig weiterfährt (104).

2. Verfahren nach Anspruch 1, **dadurch gekennzeichnet, dass** es sich bei dem einspurigen Kraftfahrzeug um ein Motorrad handelt.

3. Verfahren nach Anspruch 1, **dadurch gekennzeichnet, dass** der fahrerunabhängige Notbremsvorgang abhängig von den Signalen einer vorausschauenden Umgebungssensorik ausgelöst wird (102).

4. Vorrichtung zur fahrerunabhängigen Beeinflussung eines Lenkungselementes eines einspurigen Kraftfahrzeugs bei einem fahrerunabhängig durchgeführten Notbremsvorgang, enthaltend einen Lenkungsdämpfer oder einen Lenkaktuator, die zur Durchführung eines Verfahrens nach Anspruch 1 ausgestaltet ist, wobei
- es sich bei dem Lenkungselement um einen Lenkungsdämpfer handelt, welcher bei dem Notbremsvorgang derart beeinflusst wird, dass er eine stärkere Dämpfung von Lenkerschwingungen aufweist oder
- es sich bei dem Lenkungselement um einen Lenkaktuator zur fahrerunabhängigen Einstellung eines Lenkwinkels handelt, welcher bei einem Notbremsvorgang fahrerunabhängig derart angesteuert wird, dass das einspurige Kraftfahrzeug geradlinig weiterfährt (104).

## Claims

1. Method for influencing a steering element of a single-track motor vehicle independently of the rider during a rider-independently performed emergency braking operation, in which method
- the occurrence of a rider-independently performed emergency braking operation is ascertained (102), and
- dependent theron, the steering element is influenced independently of the rider (104),
wherein
- the steering element is a steering damper, which is influenced during the emergency braking operation in such a way that it provides greater damping of handlebar wobbles or
- the steering element is a steering actuator for the rider-independent setting of a steering angle that is activated rider-independently during an emergency braking operation in such a way that the single-track motor vehicle continues travelling in a straight line (104).

2. Method according to Claim 1, **characterized in that** the single-track motor vehicle is a motorcycle.

3. Method according to Claim 1, **characterized in that** the rider-independent emergency braking operation is initiated dependent on the signals of a forwardly directed environment sensor system (102).

4. Device for influencing a steering element of a single-track motor vehicle independently of the rider during a rider-independently performed emergency braking operation, comprising a steering damper or a steering actuator designed for carrying out a method according to Claim 1, wherein
- the steering element is a steering damper, which is influenced during the emergency braking operation in such a way that it provides greater damping of handlebar wobbles or
- the steering element is a steering actuator for the rider-independent setting of a steering angle that is activated rider-independently during an emergency braking operation in such a way that the single-track motor vehicle continues travelling in a straight line (104).

## Revendications

1. Procédé pour influencer indépendamment du conducteur un élément de direction d'un véhicule motorisé à simple voie lors d'une opération de freinage d'urgence effectuée indépendamment du conducteur, avec lequel
- la présence d'une opération de freinage d'urgence effectuée indépendamment du conducteur est déterminée (102) et
- en fonction de cela, l'élément de direction est influencé indépendamment du conducteur (104),
- l'élément de direction étant un amortisseur de direction qui, lors de l'opération de freinage d'urgence, est influencé de telle sorte qu'il présente un amortissement plus important des oscillations du guidon ou
- l'élément de direction étant un actionneur de direction destiné à régler un angle de braquage indépendamment du conducteur qui, lors d'une opération de freinage d'urgence, est commandé indépendamment du conducteur de telle sorte que le véhicule motorisé à simple voie poursuive son déplacement en ligne droite (104).

2. Procédé selon la revendication 1, **caractérisé en ce que** le véhicule motorisé à simple voie est une motocyclette.

3. Procédé selon la revendication 1, **caractérisé en ce que** l'opération de freinage d'urgence indépendante du conducteur est déclenchée en fonction des signaux d'un système de détection de l'environnement prévisionnel (102).

4. Dispositif pour influencer indépendamment du conducteur un élément de direction d'un véhicule motorisé à simple voie lors d'une opération de freinage d'urgence effectuée indépendamment du conducteur, comprenant un amortisseur de direction ou un actionneur de direction, qui est configuré pour mettre en œuvre un procédé selon la revendication 1,
- l'élément de direction étant un amortisseur de direction qui, lors de l'opération de freinage d'urgence, est influencé de telle sorte qu'il présente un amortissement plus important des oscillations du guidon ou
- l'élément de direction étant un actionneur de direction destiné à régler un angle de braquage indépendamment du conducteur qui, lors d'une opération de freinage d'urgence, est commandé indépendamment du conducteur de telle sorte que le véhicule motorisé à simple voie poursuive son déplacement en ligne droite (104).
